# EUROPEAN PATENT APPLICATION

(11) **EP 4 621 302 A1**
(43) Date of publication of application: **24.09.2025**
(21) Application number: 25705115.1
(22) Date of filing: 07.01.2025
(51) Int. Cl.: F24F 7/08

(54) **VENTILATION DEVICE**

(30) Priority: 05.02.2024 JP 2024015943
(71) Applicant: Daikin Industries, Ltd., Osaka-shi, Osaka 530-0001 (JP)
(72) Inventor: FUKUSHIMA, Wataru, Osaka-shi, Osaka 5300001 (JP); KURITA, Daiki, Osaka-shi, Osaka 5300001 (JP)
(74) Representative: Goddar, Heinz J.
(86) International application number: PCT/JP2025/000129
(87) International publication number: WO 2025/169647

(57) **Abstract**

According to the present disclosure, a ventilator (HRV) capable of suppressing an increase in cost is provided. The ventilator (HRV) includes a main-body casing (1), an exhaust fan (2), an air supply fan (3), a total heat exchanger (4), and an electrical component box (5). The exhaust fan (2) is disposed in an exhaust path (15) inside the main-body casing (1). The air supply fan (3) is disposed in an air supply path (16) inside the main-body casing (1). The total heat exchanger (4) is disposed in the exhaust path (15) and the air supply path (16). The electrical component box (5) is connected to the main-body casing (1) to store a heat generating component (HPC). The electrical component box (5) includes an air inlet (51) configured to introduce air (A) from outside the main-body casing (1), and an air outlet (52) configured to communicate with the exhaust path (15) on an upstream side of the exhaust fan (2).

## Description

### TECHNICAL FIELD

The present disclosure relates to ventilators.

### BACKGROUND ART

Conventionally, a ventilator that exchanges total heat between indoor air to be exhausted and outdoor air to be supplied is known (see, e.g., Patent Document 1). Such ventilator is provided with an electrical component box. The electrical component box contains drive circuits for an air supply fan and an exhaust fan.

### RELATED ART DOCUMENTS

### PATENT DOCUMENTS

Patent Document 1: Japanese Laid-Open Patent Application No 2014-178083

### SUMMARY OF THE INVENTION

### PROBLEM TO BE SOLVED BY THE INVENTION

In the ventilator described in the above-mentioned Patent Document 1, when an additional fan is installed in the electrical component box to cool a heat generating component included in the drive circuit stored in the electrical component box, the cost of the ventilator may increase.

According to the present disclosure, a ventilator capable of suppressing the cost increase is provided.

### MEANS FOR SOLVING THE PROBLEMS

One aspect of the present disclosure is to provide a ventilator (heat recovery ventilator (HRV)) including: main-body casing (1); an exhaust fan (2) disposed in an exhaust path (15) inside the main-body casing (1); an air supply fan (3) disposed in an air supply path (16) inside the main-body casing (1); a total heat exchanger (4) disposed in the exhaust path (15) and the air supply path (16); and an electrical component box (5) connected to the main-body casing (1) and configured to house a heat generating component (HPC), wherein the electrical component box (5) includes an air inlet (51) configured to introduce the air (A) outside the main-body casing (1), and an air outlet (52) communicating with the exhaust path (15) on an upstream side of the exhaust fan (2).

### ADVANTAGEOUS EFFECTS OF THE INVENTION

According to the ventilator (HRV) of the above embodiment, it is possible to provide a ventilator capable of suppressing an increase in cost by cooling the heat generating component (HPC) without installing an additional fan inside the electrical component box (5).

In the ventilator (HRV) of the above embodiment, the main-body casing (1) may include a first sidewall (1c) provided with a takeout port (17) for the total heat exchanger (4), and the electrical component box (5) may be connected to the first sidewall (1c). This configuration facilitates access to the electrical component box (5) and enhances maintainability of the ventilator (HRV).

In the ventilator (HRV) of the above embodiment, the exhaust path (15) may include an exhaust inlet (11) opened at an upstream end of the exhaust path (15) and an exhaust outlet (12) opened at a downstream end of the exhaust path (15), and the electrical component box (5) may be disposed between the total heat exchanger (4) and the exhaust inlet (11), inside the exhaust path (15). With this configuration, the ventilator (HRV) can be miniaturized as compared with the case where the electrical component box (5) is disposed outside the main-body casing (1).

The ventilator (HRV) of the above embodiment may include a connecting path (6) configured to communicate the air outlet (52) of the electrical component box (5) with the exhaust path (15). With this configuration, the degree of freedom of the position where the air outlet (52) is formed in the electrical component box (5) can be enhanced, and thus the heat generating component (HPC) can be cooled more effectively.

In the ventilator (HRV) of the above embodiment, the electrical component box (5) may be arranged outside the main-body casing (1). With this configuration, cross-sectional flow-path areas of the exhaust path (15) and the air supply path (16) can be secured, and ventilation by the ventilator (HRV) can be performed smoothly. Moreover, the degree of freedom of the position where the air inlet (51) for introducing the air (A) from the outside of the main-body casing (1) is formed in the electrical component box (5) can be enhanced. Moreover, as compared with the case where the electrical component box (5) is arranged inside the main-body casing (1), access to the electrical component box (5) can be facilitated, and the maintainability of the electrical component box (5) can be enhanced.

The ventilator (HRV) of the above embodiment may include a connecting path (6) for communicating the air outlet (52) of the electrical component box (5) with an air intake port (19a) opened in a partition wall (15c) of the exhaust path (15). With this configuration, the degree of freedom of the position where the air outlet (52) is formed in the electrical component box (5) is enhanced, and the heat generating component (HPC) can be cooled more effectively.

In the ventilator (HRV) of the above embodiment, the air inlet (51) of the electrical component box (5) may include a plurality of slits (51a) formed in the electrical component box (5). With this configuration, intrusion of foreign matter into the air inlet (51) of the electrical component box (5) can be suppressed.

In the ventilator (HRV) of the above embodiment, the air inlet (51) of the electrical component box (5) may be provided on a sidewall (5a, 5b, 5c, or 5d) of the electrical component box (5). With this configuration, entering of the water falling from above the ventilator (HRV) into the air inlet (51) can be suppressed.

### BRIEF DESCRIPTION OF THE DRAWINGS

[FIG. 1] FIG. 1 is a vertical cross-sectional view schematically illustrating a ventilator according to Embodiment 1 of the present disclosure.
[FIG. 2] FIG. 2 is a schematic plan view of the ventilator (HRV) of FIG. 1.
[FIG. 3] FIG. 3 is a block diagram illustrating a configuration of the ventilator (HRV) of FIG. 1.
[FIG. 4] FIG. 4 is a schematic enlarged cross-sectional view of the ventilator (HRV) taken along a line IV-IV of FIG. 2.
[FIG. 5] FIG. 5 is an enlarged cross-sectional view that corresponds to FIG. 4, illustrating a ventilator according to Embodiment 2 of the present disclosure.

### DETAILED DESCRIPTION OF THE INVENTION

Embodiments of the ventilator according to the present disclosure will be described in the following with reference to the drawings.

### [Embodiment 1]

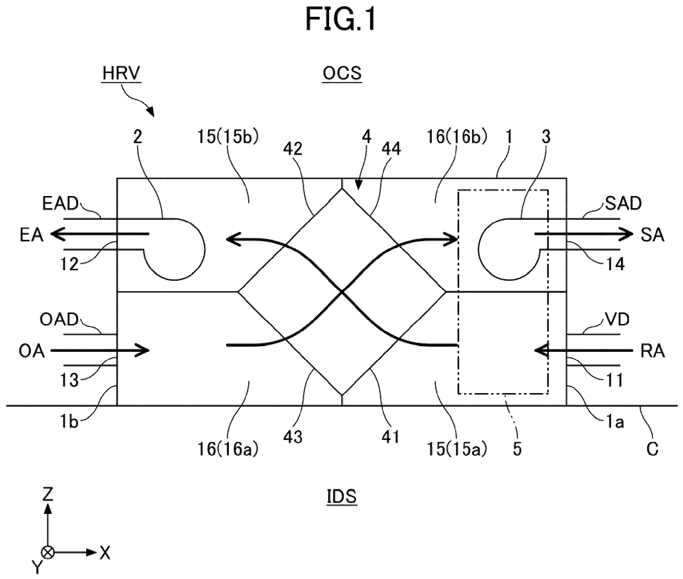

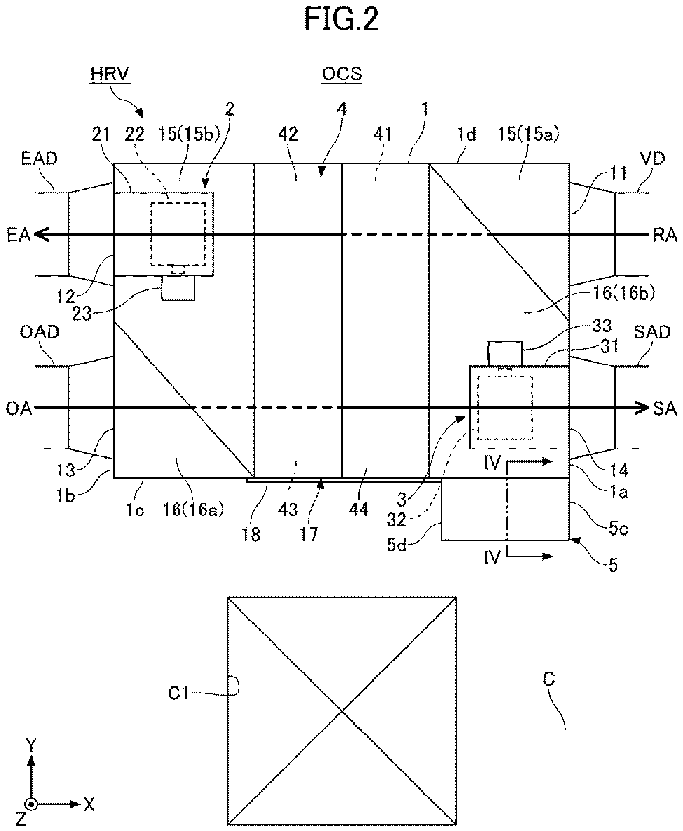

FIG. 1 is a vertical sectional view schematically illustrating Embodiment 1 of the ventilator according to the present disclosure. FIG. 2 is a schematic plan view of the ventilator (HRV) as illustrated in FIG. 1. FIG. 2 is a plan view in which an upper end of the main-body casing (1) of the ventilator (HRV) as illustrated in FIG. 1 is opened. FIGS. 1 and 2 illustrate a three-dimensional orthogonal coordinate system of an X-axis parallel to a longitudinal direction of the ventilator (HRV), a Y-axis parallel to a width direction of the ventilator (HRV), and a Z-axis parallel to a vertical direction of the ventilator (HRV) .

The ventilator (HRV) of the present embodiment is disposed, for example, in a space above the ceiling (C) that partitions an upper part of an indoor space (IDS), that is, in a space over the ceiling (OCS). The ventilator (HRV) may be disposed in an indoor space (IDS) that does not have a space over the ceiling (OCS), such as when the ceiling is a skeleton ceiling. The ventilator (HRV) sucks in indoor air (RA) from the indoor space (IDS) through, for example, a ventilation opening provided in the ceiling (C) and a ventilation duct (VD), and blows out exhaust air (EA) to the space outside the building through an exhaust duct (EAD) and an exhaust opening provided in the outermost wall of the building.

The ventilator (HRV) sucks in outdoor air (OA) from the space outside the building through an outdoor air port provided in the outermost wall of the building and an outdoor air duct (OAD), and blows in fresh supply air (SA) to the indoor space (IDS) through an air supply duct (SAD) and an air supply port provided in the ceiling (C). The ventilator (HRV) exchanges heat between the indoor air (RA) and the outdoor air (OA) to reduce a temperature difference between the supply air (SA) supplied to the indoor space (IDS) and the indoor air (RA).

The ventilator (HRV) includes, for example, the main-body casing (1), the exhaust fan (2), the air supply fan (3), the total heat exchanger (4), and the electrical component box (5).

The main-body casing (1) is, for example, a housing having a substantially rectangular parallelepiped shape. The main-body casing (1) includes, for example, an indoor-side sidewall (1a) provided with the exhaust inlet (11), and an outdoor-side sidewall (1b) provided with the exhaust outlet (12). The exhaust inlet (11) is connected to, for example, a downstream end of the ventilation duct (VD). An upstream end of the ventilation duct (VD) is connected to, for example, the ventilation opening provided in the ceiling (C). The exhaust outlet (12) is connected to, for example, an upstream end of an exhaust duct (EAD). A downstream end of the exhaust duct (EAD) is connected to, for example, the exhaust opening provided in the outermost wall of the building.

Furthermore, the main-body casing (1) is provided with an air supply inlet (13) on the outdoor-side sidewall (1b) and an air supply outlet (14) on the indoor-side sidewall (1a). The air supply inlet (13) is connected, for example, to a downstream end of the outdoor air duct (OAD). An upstream end of the outdoor air duct (OAD) is connected, for example, to an outdoor air port provided on the outermost wall of the building. The air supply outlet (14) is connected, for example, to an upstream end of the air supply duct (SAD). A downstream end of the air supply duct (SAD) is connected, for example, to the air supply port provided on the ceiling (C).

In addition, the exhaust path (15) and the air supply path (16) are defined in the main-body casing (1) by, for example, the partition wall. The exhaust path (15) connects, for example, the exhaust inlet (11) and the exhaust outlet (12). The air supply path (16) connects, for example, the air supply inlet (13) and the air supply outlet (14). The total heat exchanger (4) is disposed in the exhaust path (15) and the air supply path (16). The exhaust path (15) and the air supply path (16) are provided to cross each other through the total heat exchanger (4), for example, as illustrated in FIG. 1.

The exhaust path (15) is located, for example, on a lower side of the air supply path (16) in an exhaust upstream section (15a) located on an upstream side of the air flow relative to the total heat exchanger (4). The exhaust path (15) is located, for example, on an upper side of the air supply path (16) in an exhaust downstream section (15b) located on a downstream side of the air flow relative to the total heat exchanger (4).

In other words, the air supply path (16) is located, for example, on a lower side of the exhaust path (15) in an air-supply upstream section (16a) located on an upstream side of the air flow relative to the total heat exchanger (4). The air supply path (16) is located on an upper side of the exhaust path (15) in an air-supply downstream section (16b) located on a downstream side of the air flow relative to the total heat exchanger (4).

The exhaust fan (2) is disposed in the exhaust path (15) inside the main-body casing (1). Specifically, the exhaust fan (2) is disposed, for example, in the exhaust path (15), in the exhaust downstream section (15b) located on the downstream side of the air flow from the total heat exchanger (4). The exhaust fan (2) is, for example, a sirocco fan and includes a casing (21), a cylindrical multi-blade fan (22) housed in the casing (21), and a motor (23) for rotating the multi-blade fan (22).

The air supply fan (3) is disposed in the air supply path (16) inside the main-body casing (1). Specifically, the air supply fan (3) is disposed, for example, in the air supply path (16), in the air-supply downstream section (16b) located on the downstream side of the air flow from the total heat exchanger (4). The air supply fan (3) is, for example, a sirocco fan and includes a casing (31), a cylindrical multi-blade fan (32) housed in the casing (31), and a motor (33) for rotating the multi-blade fan (32).

The total heat exchanger (4) is disposed in the exhaust path (15) and the air supply path (16). The total heat exchanger (4) includes a heat exchange element in which, for example, first and second flow path forming members formed of a thin film dense material that passes water molecules and shields miscellaneous gases such as carbon dioxide are alternately laminated via partition plates of the same material. The total heat exchanger (4) has an elongated rectangular parallelepiped shape, for example, as illustrated in FIGS. 1 and 2. The total heat exchanger (4) has, for example, a diamond shape in a side view orthogonal to the longitudinal direction as illustrated in FIG. 1, and includes a first surface (41), a second surface (42), a third surface (43), and a fourth surface (44) along the longitudinal direction of the total heat exchanger (4).

The first flow path forming member and the partition plate included in the heat exchange element of the total heat exchanger (4) form, for example, a flow path that communicates between the first surface (41) and the second surface (42) of the total heat exchanger (4). The first surface (41) of the total heat exchanger (4) is a surface that faces obliquely downward facing the indoor-side sidewall (1a) of the main-body casing (1), and is connected to the downstream end of the exhaust upstream section (15a) of the exhaust path (15). The second surface (42) of the total heat exchanger (4) is a surface that faces obliquely upward facing the outdoor-side sidewall (1b) of the main-body casing (1), and is connected to the upstream end of the exhaust downstream section (15b) of the exhaust path (15).

The second flow path forming member and the partition plate included in the heat exchange element of the total heat exchanger (4) form, for example, a flow path that communicates between the third surface (43) and the fourth surface (44) of the total heat exchanger (4). The third surface (43) of the total heat exchanger (4) is a surface that faces obliquely downward facing the outdoor-side sidewall (1b) of the main-body casing (1), and is connected to the downstream end of the air-supply upstream section (16a) of the air supply path (16). The fourth surface (44) of the total heat exchanger (4) is a surface that faces obliquely upward facing the indoor-side sidewall (1a) of the main-body casing (1), and is connected to the upstream end of the air-supply downstream section (16b) of the air supply path (16).

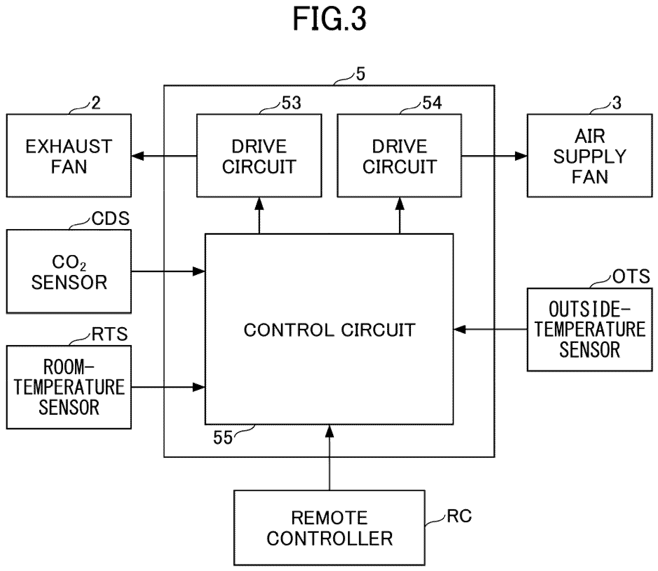

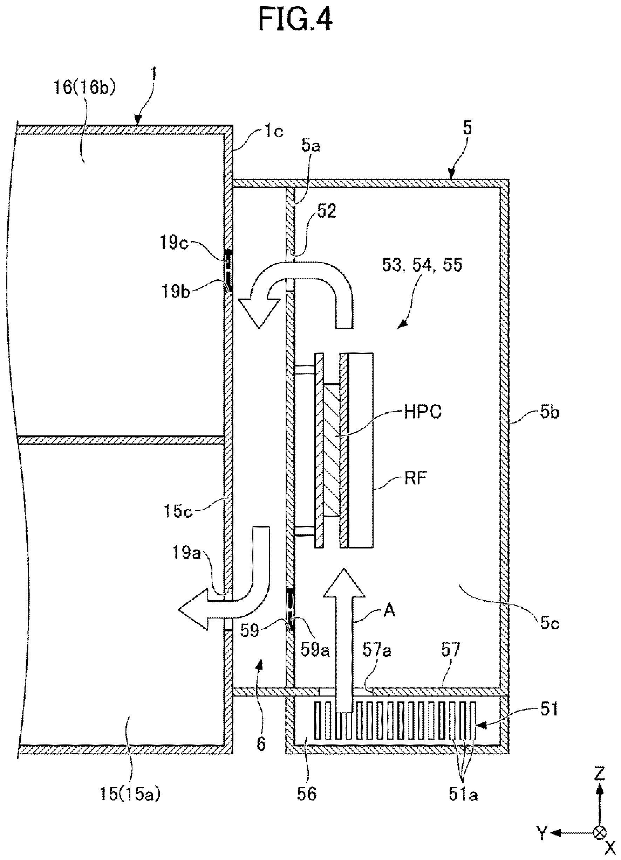

FIG. 3 is a block diagram illustrating the configuration of the ventilator (HRV) of FIG. 1. FIG. 4 is a schematic enlarged cross-sectional view of the ventilator (HRV) taken along a line IV-IV of FIG. 2. As illustrated in FIG. 4, the electrical component box (5) is connected to, for example, the main-body casing (1) and houses the heat generating component (HPC). Specifically, the main-body casing (1) has, for example, the first sidewall (1c) provided with the takeout port (17) for the total heat exchanger (4), as illustrated in FIG. 2. The electrical component box (5) is connected to, for example, the first sidewall (1c) of the main-body casing (1).

The first sidewall (1c) of the main-body casing (1) is a sidewall adjacent to an inspection opening (C1) provided in the ceiling (C), as illustrated in FIG. 2. A maintenance worker who performs an inspection and a maintenance or the like of the ventilator (HRV), for example, opens the inspection opening (C1) provided in the ceiling (C) to access the ventilator (HRV). The takeout port (17) for the total heat exchanger (4) provided in the first sidewall (1c) of the main-body casing (1) is closed by, for example, a lid (18) provided to be openable and closable.

When performing a maintenance or a replacement of the total heat exchanger (4), for example, the maintenance worker opens the lid (18) from the inspection opening (C1) and opens the takeout port (17) for the total heat exchanger (4) provided on the first sidewall (1c) of the main-body casing (1). Thus, the maintenance worker can extract the total heat exchanger (4) from the takeout port (17) in the longitudinal direction and take out the total heat exchanger (4) from the inside of the main-body casing (1).

Note that a second sidewall (1d) of the main-body casing (1) opposite to the first sidewall (1c) of the main-body casing (1) does not include the takeout port (17) for taking out the total heat exchanger (4). A bypass path is provided between the second sidewall (1d) of the main-body casing (1) and the total heat exchanger (4), for example, for diverting indoor air (RA) from the exhaust upstream section (15a) of the exhaust path (15) to the exhaust downstream section (15b) without passing it through the total heat exchanger (4). Therefore, it is difficult to take out the total heat exchanger (4) from a second sidewall (1d) side.

As illustrated in FIG. 4, the electrical component box (5) includes, for example, the air inlet (51) for introducing the air (A) from the outside of the main-body casing (1), and the air outlet (52) communicating with the exhaust path (15) at the exhaust upstream section (15a) on the upstream side of the exhaust fan (2). As illustrated in FIG. 3, the electrical component box (5) contains, for example, a drive circuit (53) for the exhaust fan (2), a drive circuit (54) for the air supply fan (3), and a control circuit (55) for controlling the drive circuit (53) and the drive circuit (54).

The drive circuit (53) of the exhaust fan (2) includes, for example, an inverter circuit for rotating the motor (23) of the exhaust fan (2) at a predetermined rotational speed based on a control command input from the control circuit (55). The drive circuit (54) of the air supply fan (3) includes, for example, an inverter circuit for rotating the motor (33) of the air supply fan (3) at a predetermined rotational speed based on a control command input from the control circuit (55). The drive circuit (53) and the drive circuit (54) include, for example, the heat generating component (HPC) such as a power transistor and diodes included in the inverter circuits, as illustrated in FIG. 4.

The control circuit (55) includes, for example, one or more microcontrollers including a central processing unit (CPU) and a memory. The control circuit (55) rotates the exhaust fan (2) and the air supply fan (3) at a predetermined rotational speed via the drive circuit (53) and the drive circuit (54), for example, by executing a program stored in the memory by the CPU. The control circuit (55) is connected to, for example, a carbon dioxide sensor (CDS), a room-temperature sensor (RTS), an outside-temperature sensor (OTS), and a remote controller (RC), as illustrated in FIG. 3.

The carbon dioxide sensor (CDS) detects, for example, the concentration of carbon dioxide in the indoor air (RA) and outputs a detection result to the control circuit (55). The room-temperature sensor (RTS) detects, for example, a temperature of the indoor air (RA) and outputs a detection result to the control circuit (55). The outside-temperature sensor (OTS) detects, for example, a temperature of the outdoor air (OA) and outputs a detection result to the control circuit (55). The remote controller (RC) receives, for example, an operation of starting or stopping the ventilator (HRV) by the user of the ventilator (HRV), and outputs a signal corresponding to the operation to the control circuit (55).

When a signal corresponding to a start operation of the ventilator (HRV) is input from the remote controller (RC), for example, the control circuit (55) outputs a control signal to the drive circuit (53) and the drive circuit (54) based on the detection results of the carbon dioxide sensor (CDS), the room-temperature sensor (RTS), and the outside-temperature sensor (OTS). Thus, the drive circuit (53) and the drive circuit (54) rotate the motor (23) of the exhaust fan (2) and the motor (33) of the air supply fan (3), respectively, at a predetermined rotational speed based on the concentration of carbon dioxide and the temperature of the indoor air (RA) and the temperature of the outdoor air (OA).

As illustrated in FIG. 4, the heat generating component (HPC) included in the drive circuit (53) and the drive circuit (54) is fixed to an inner wall surface between the air inlet (51) and the air outlet (52) of the electrical component box (5). A heat radiation fin (RF) is attached to the heat generating component (HPC), for example. The air (A) taken in from the air inlet (51) of the electrical component box (5) flows from the air inlet (51) to the air outlet (52) inside the electrical component box (5), for example, and cools the heat generating component (HPC) through the heat radiation fin (RF).

Specifically, in the electrical component box (5), for example, the air inlet (51) is provided at one end in the vertical direction, and the air outlet (52) is provided at the other end in the vertical direction. The heat generating component (HPC) is disposed between the air inlet (51) and the air outlet (52) in the vertical direction, for example.

More specifically, as illustrated in FIG. 4, the air inlet (51) is provided at the lower end of the electrical component box (5), for example, and the air outlet (52) is provided at the upper end of the electrical component box (5), for example. However, the ventilator (HRV) can be disposed upside down, for example. In this case, the air inlet (51) is provided at the upper end of the electrical component box (5), for example, and the air outlet (52) is provided at the lower end of the electrical component box (5), for example.

The electrical component box (5) is disposed outside the main-body casing (1), for example, as illustrated in FIGS. 2 and 4. Specifically, as illustrated in FIG. 2, for example, the electrical component box (5) is connected to an outer surface of the first sidewall (1c) of the main-body casing (1) outside the main-body casing (1) between the indoor-side sidewall (1a) of the main-body casing (1) and the takeout port (17) for the total heat exchanger (4).

As illustrated in FIGS. 1 and 4, for example, the electrical component box (5) has an upper portion adjacent to the air supply path (16) through the first sidewall (1c) of the main-body casing (1), and a lower portion adjacent to the exhaust path (15) through the first sidewall (1c) of the main-body casing (1). In other words, the electrical component box (5) is disposed, for example, across both the exhaust upstream section (15a) of the exhaust path (15) and the air-supply downstream section (16b) of the air supply path (16).

In addition, as illustrated in FIG. 4, for example, the ventilator (HRV) includes the connecting path (6) for communicating the air outlet (52) of the electrical component box (5) with the air intake port (19a) opened in the partition wall (15c) of the exhaust path (15) of the main-body casing (1). The partition wall (15c) of the exhaust path (15) provided with the air intake port (19a) as illustrated in FIG. 4 is, for example, a lower portion of the first sidewall (1c) of the main-body casing (1). The connecting path (6) is defined, for example, between the first sidewall (1c) of the main-body casing (1) and the sidewall (5a) of the electrical component box (5) provided with the air outlet (52), and is closed at the front, rear, left, right, top, and bottom.

The sidewall (5a) of the electrical component box (5) defining the connecting path (6) includes an opening (59) at a position facing, for example, the air intake port (19a) provided in the partition wall (15c) of the exhaust path (15) of the main-body casing (1). The opening (59) is closed by, for example, a resin closing member (59a). The closing member (59a) includes, for example, radial slits, and is capable of suppressing the amount of the air (A) passing through the slits, and allowing wiring and the like to pass through the slits.

Similarly, the first sidewall (1c) of the main-body casing (1) defining the connecting path (6) includes an opening (19b), for example, at a position opposite to the air outlet (52) provided in the sidewall (5a) of the electrical component box (5). The opening (19b) is closed by, for example, a resin closing member (19c). The closing member (19c) incudes slits formed radially, for example, in the same manner as the closing member (59a) closing the opening (59) of the electrical component box (5), and is capable of suppressing the amount of the air (A) passing through the slits and allowing wiring and the like to pass through the slits.

Through the air intake port (19a) of the main-body casing (1) and the opening (59) of the electrical component box (5), for example, wiring for connecting the exhaust fan (2) disposed in the exhaust path (15) of the main-body casing (1) and the drive circuit (53) housed in the electrical component box (5) is inserted. In addition, wiring for connecting the air supply fan (3) disposed in the air supply path (16) of the main-body casing (1) and the drive circuit (54) housed in the electrical component box (5), for example, is inserted through the air outlet (52) of the electrical component box (5) and the opening (19b) of the main-body casing (1).

When the ventilator (HRV) does not include the connecting path (6), the sidewall (5a) of the electrical component box (5) provided with the air outlet (52) may be shared with the first sidewall (1c) of the main-body casing (1). In this case, the air outlet (52) of the electrical component box (5) is provided on the lower side of the first sidewall (1c) included in the partition wall (15c) of the exhaust path (15) in the main-body casing (1), for example. In this case, the air outlet (52) of the electrical component box (5) functions as an air intake port (19a) opening in the partition wall (15c) of the exhaust path (15). The heat generating component (HPC) is disposed, for example, between the air inlet (51) and the air outlet (52) of the electrical component box (5).

The air inlet (51) for introducing the air outside the main-body casing (1) into the electrical component box (5) includes, for example, a plurality of slits (51a) formed in the electrical component box (5). The air inlet (51) may be, for example, a single slit extending in the horizontal direction. The air inlet (51) may be, for example, provided in a lattice shape having a plurality of openings, and may include a plurality of through holes of a punched metal (punched wire mesh).

The air inlet (51) of the electrical component box (5) is, for example, provided in the sidewall (5c) of the electrical component box (5). The electrical component box (5) has, for example, a generally rectangular parallelepiped shape and includes the four sidewalls (5a, 5b, 5c, and 5d). The first sidewall (5a) faces, for example, the main-body casing (1) of the electrical component box (5). The second sidewall (5b) faces, for example, the first sidewall (5a) of the electrical component box (5). The third sidewall (5c) is, for example, an indoor-side sidewall facing in the same direction as the indoor-side sidewall (1a) of the main-body casing (1). The fourth sidewall (5d) is, for example, an outdoor-side sidewall facing in the same direction as the outdoor-side sidewall (1b) of the main-body casing (1). The air inlet (51) may be provided on one or more of the four sidewalls (5a, 5b, 5c, and 5d) of the electrical component box (5).

In addition, the electrical component box (5) includes, for example, a partition wall (57) which partitions an internal space for accommodating the heat generating component (HPC) of the electrical component box (5) and an air inlet chamber (56) into which the air (A) outside the main-body casing (1) is introduced through the air inlet (51). The partition wall (57) includes, for example, a ventilation hole (57a) at a position overlapping with the heat generating component (HPC) in the vertical direction when the ventilator (HRV) is disposed in the space over the ceiling (OCS).

The air inlet chamber (56) is formed at one end of the electrical component box (5) in the vertical direction when the ventilator (HRV) is disposed in the space over the ceiling (OCS). Specifically, in the state as illustrated in FIG. 4, the air inlet chamber (56) is formed at the lower end of the electrical component box (5). However, the ventilator (HRV) may be arranged in an inverted state of what is illustrated in FIG. 4. In this case, the air inlet chamber (56) is formed, for example, at the upper end of the electrical component box (5).

The operation of the ventilator (HRV) of the present embodiment will be described in the following.

As described above, the ventilator (HRV) of the present embodiment includes the main-body casing (1), the exhaust fan (2), the air supply fan (3), the total heat exchanger (4), and the electrical component box (5). The exhaust fan (2) is disposed in the exhaust path (15) inside the main-body casing (1). The air supply fan (3) is disposed in the air supply path (16) inside the main-body casing (1). The total heat exchanger (4) is disposed in the exhaust path (15) and the air supply path (16). The electrical component box (5) is connected to the main-body casing (1) to store the heat generating component (HPC). The electrical component box (5) includes the air inlet (51) configured to introduce the air (A) from outside the main-body casing (1), and the air outlet (52) configured to communicate with the exhaust path (15) on the upstream side of the exhaust fan (2).

With this configuration, the ventilator (HRV) of the present embodiment can take in the indoor air (RA) from an indoor space (IDS) into the exhaust path (15) through the ventilation opening and the ventilation duct (VD) provided in the ceiling (C) by operating the exhaust fan (2). Furthermore, the ventilator (HRV) operates the exhaust fan (2) to allow the indoor air (RA) taken into the exhaust path (15) to pass through the total heat exchanger (4), and to be discharged from the exhaust path (15) to the outside as the exhaust air (EA) through the exhaust duct (EAD) and the exhaust opening provided on the outermost wall of the building.

In addition, the ventilator (HRV) can take in the outdoor air (OA) from the outdoor space into the air supply path (16) via the outdoor air port and the outdoor air duct (OAD) provided on the outermost wall of the building by operating the air supply fan (3). In addition, the ventilator (HRV) can make the outdoor air (OA) taken into the air supply path (16) pass through the total heat exchanger (4) by operating the air supply fan (3), and can exchange heat and transfer water molecules with the indoor air (RA) to be discharged outdoors. Furthermore, the ventilator (HRV) can supply the supply air (SA), which is the outdoor air (OA) that has passed through the total heat exchanger (4), from the air supply path (16) to the indoor space (IDS) via the air supply duct (SAD) and the air supply port provided in the ceiling (C).

Furthermore, in the ventilator (HRV) according to the present embodiment, the electrical component box (5) for storing the heat generating component (HPC) includes the air outlet (52) connected to the main-body casing (1) and communicating with the exhaust path (15) on the upstream side of the exhaust fan (2). Therefore, when the exhaust fan (2) operates and a negative pressure is generated on the upstream side of the exhaust fan (2) in the exhaust path (15) of the main-body casing (1), the air in the electrical component box (5) is sucked from the air outlet (52) of the electrical component box (5) into the exhaust path (15) of the main-body casing (1).

As a result, the air (A) from the outside of the main-body casing (1), such as the air in the space over the ceiling (OCS), is introduced from the air inlet (51) of the electrical component box (5), and the air (A) flows from the air inlet (51) to the air outlet (52) inside the electrical component box (5). This air (A) can cool the heat generating component (HPC) stored in the electrical component box (5). Therefore, according to the ventilator (HRV) of the present embodiment, the heat generating component (HPC) can be cooled without installing an additional fan inside the electrical component box (5), and an increase in cost can be suppressed.

The air outlet (52) of the electrical component box (5) communicates with the exhaust path (15) inside the main-body casing (1). Therefore, the air (A) outside the main-body casing (1) introduced from the air inlet (51) of the electrical component box (5) can be discharged from the exhaust path (15) inside the main-body casing (1) through the exhaust duct (EAD) and the exhaust opening to the space outside the building. Thus, a decrease in an effective ventilation amount of the indoor space (IDS) can be suppressed. That is, according to the ventilator (HRV) of the present embodiment, the heat generating component (HPC) can be cooled without reducing the effective ventilation amount.

In the ventilator (HRV) of the present embodiment, the main-body casing (1) includes the first sidewall (1c) provided with the takeout port (17) for the total heat exchanger (4). The electrical component box (5) is connected to the first sidewall (1c) of the main-body casing (1).

With this configuration, maintainability of the ventilator (HRV) can be enhanced. Specifically, in the ventilator (HRV), a work space including, for example, the inspection opening (C1) in the ceiling (C) for maintenance of the ventilator (HRV) to be performed by a maintenance worker is secured in the region adjacent to the first sidewall (1c) of the main-body casing (1) provided with the takeout port (17) for the total heat exchanger (4). Therefore, by connecting the electrical component box (5) to the first sidewall (1c) of the main-body casing (1), access to the electrical component box (5) during maintenance is facilitated, and maintainability of the ventilator (HRV) is enhanced.

In the ventilator (HRV) of the present embodiment, the electrical component box (5) is arranged outside the main-body casing (1).

With this configuration, the cross-sectional flow-path areas of the exhaust path (15) and the air supply path (16) can be secured, and ventilation by the ventilator (HRV) can be performed smoothly. In addition, the degree of freedom of the position where the air inlet (51) for introducing the air (A) outside the main-body casing (1) is formed in the electrical component box (5) is enhanced, and the heat generating component (HPC) can be cooled more effectively. In addition, as compared with the case where the electrical component box (5) is arranged inside the main-body casing (1), access to the electrical component box (5) is facilitated, and the maintainability of the electrical component box (5) is enhanced.

In addition, the ventilator (HRV) of the present embodiment includes the connecting path (6) for communicating the air outlet (52) of the electrical component box (5) with the air intake port (19a) opened in the partition wall (15c) of the exhaust path (15) inside the main-body casing (1).

With this configuration, the degree of freedom of the position where the air outlet (52) is formed in the electrical component box (5) is enhanced, and the heat generating component (HPC) can be cooled more effectively. More specifically, for example, as illustrated in FIG. 4, even when the exhaust path (15) is provided in the lower portion of the main-body casing (1), the air outlet (52) of the electrical component box (5) can be formed in the position facing the upper portion of the main-body casing (1). Thus, the heat generating component (HPC) can be readily arranged between the air inlet (51) and the air outlet (52), and the heat generating component (HPC) can be cooled more effectively.

In the ventilator (HRV) of the present embodiment, the air inlet (51) of the electrical component box (5) includes the plurality of slits (51a) formed in the electrical component box (5). With this configuration, entry of foreign matter into the air inlet (51) of the electrical component box (5) can be suppressed.

In the ventilator (HRV) of the present embodiment, the air inlet (51) of the electrical component box (5) is provided on the sidewall (5a, 5b, 5c, or 5d) of the electrical component box (5). With this configuration, water falling from above the ventilator (HRV) can be suppressed from entering the air inlet (51).

In the ventilator (HRV), the electrical component box (5) includes the partition wall (57) that partitions the internal space for storing the heat generating component (HPC) and the air inlet chamber (56) provided with the air inlet (51). The partition wall (57) includes the ventilation hole (57a) provided at the position overlapping with the heat generating component (HPC) in a flow direction of the air (A). The heat generating component (HPC) is arranged between the ventilation hole (57a) and the air outlet (52) in the flow direction of the air (A).

With this configuration, the air (A) introduced into the air inlet chamber (56) from the air inlet (51) of the electrical component box (5) passes through the ventilation hole (57a) of the partition wall (57) which partitions the internal space of the electrical component box (5) containing the heat generating component (HPC) and the air inlet chamber (56), and the flow rate increases. Then, the heat generating component (HPC) is cooled by the air (A) that has passed through the ventilation hole (57a) and has increased in flow rate. This makes it possible to cool the heat generating component (HPC) more effectively.

As described above, according to the present embodiment, the heat generating component (HPC) stored in the electrical component box (5) can be cooled without installing an additional fan in the electrical component box (5), and a ventilator (HRV) capable of suppressing an increase in cost is provided.

### [Embodiment 2]

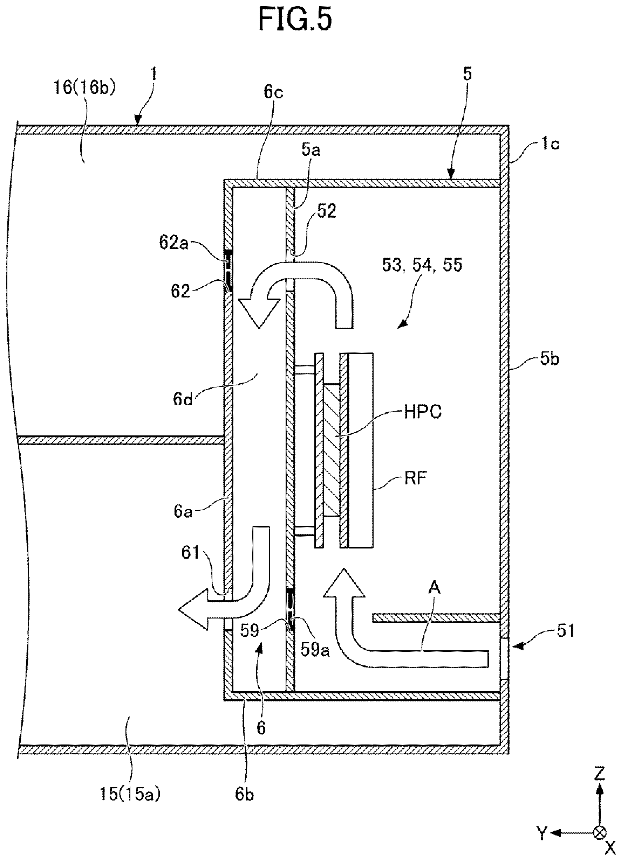

Hereinafter, a ventilator according to Embodiment 2 of the present disclosure will be described with reference to FIG. 5 and FIGS. 1 to 3.

FIG. 5 is an enlarged cross-sectional view that corresponds to FIG. 4, illustrating a ventilator according to Embodiment 2 of the present disclosure. A ventilator (HRV) of the present embodiment differs from the ventilator (HRV) of Embodiment 1 in that an electrical component box (5) is disposed inside a main-body casing (1). Since other aspects of the ventilator (HRV) of the present embodiment are the same as those of the ventilator (HRV) of Embodiment 1, similar components are denoted by the same reference numerals and description thereof is omitted.

Also, in the ventilator (HRV) of the present embodiment as illustrated in FIG. 5, an exhaust path (15) inside the main-body casing (1) includes an exhaust inlet (11) opened at the upstream end and an exhaust outlet (12) opened at the downstream end. The electrical component box (5) is disposed in an exhaust upstream section (15a) between a total heat exchanger (4) and the exhaust inlet (11) inside the exhaust path (15). A part of the electrical component box (5) may project outside the main-body casing (1).

Specifically, for example, the electrical component box (5) is disposed inside a first sidewall (1c) of the main-body casing (1) provided with a takeout port (17) for the total heat exchanger (4). The first sidewall (1c) of the main-body casing (1) includes a sidewall (5b) opposite to a sidewall (5a) of the electrical component box (5) provided with an air outlet (52). The sidewall (5b) of the electrical component box (5) is formed with an air inlet (51) for introducing supply air outside the main-body casing (1). The sidewall (5b) of the electrical component box (5) may be openably and closably provided.

An upper portion of the electrical component box (5) is disposed inside an air-supply downstream section (16b) of an air supply path (16), and a lower portion of the electrical component box (5) is disposed inside the exhaust upstream section (15a) of the exhaust path (15). The air inlet (51) is provided at the lower end of the sidewall (5b) of the electrical component box (5), and the air outlet (52) is provided at the upper end of the sidewall (5a) of the electrical component box (5).

The ventilator (HRV) includes a connecting path (6) for communicating the air outlet (52) of the electrical component box (5) with the exhaust path (15). The connecting path (6) includes, for example, a sidewall (6a) facing the sidewall (5a) of the electrical component box (5), a bottom wall (6b) closing the lower end of the connecting path (6), an upper wall (6c) closing the upper end of the connecting path (6), a sidewall (6d) closing the indoor end of the connecting path (6), and a sidewall closing the end on the outdoor side of the connecting path (6).

The sidewall (6a) of the connecting path (6) that faces the sidewall (5a) including the air outlet (52) of an electrical component box (5) is provided with a communication hole (61) for communicating a space inside the connecting path (6) with a space inside the exhaust path (15). The communication hole (61) of the connecting path (6) is provided, for example, at a position facing an opening (59) provided in the sidewall (5a) of the electrical component box (5). Through the communication hole (61) of the opening (59) of the electrical component box (5) and the connecting path (6), for example, wiring for connecting an exhaust fan (2) disposed in the exhaust path (15) of the main-body casing (1) and a drive circuit (53) housed in the electrical component box (5) is inserted.

The sidewall (6a) of the connecting path (6) includes, for example, an opening (62) at a position facing the air outlet (52) of the electrical component box (5). The opening (62) is closed, for example, by a closing member (62a) similar to the closing member (59a). Wiring for connecting an air supply fan (3) disposed in the air supply path (16) of the main-body casing (1) and a drive circuit (54) housed in the electrical component box (5) is inserted through the air outlet (52) of the electrical component box (5) and the opening (62) of the air outlet (52) of the connecting path (6), for example.

The operation of the ventilator (HRV) of the present embodiment will be described in the following.

The ventilator (HRV) of the present embodiment includes the main-body casing (1), the exhaust fan (2), the air supply fan (3), the total heat exchanger (4), and the electrical component box (5) in the same manner as the ventilator (HRV) of Embodiment 1. The exhaust fan (2) is disposed in the exhaust path (15) inside the main-body casing (1). The air supply fan (3) is disposed in the air supply path (16) inside the main-body casing (1). The total heat exchanger (4) is disposed in the exhaust path (15) and the air supply path (16). The electrical component box (5) is connected to the main-body casing (1) and houses a heat generating component (HPC). The electrical component box (5) includes the air inlet (51) for introducing the air (A) outside the main-body casing (1) and the air outlet (52) communicating with the exhaust path (15) on the upstream side of the exhaust fan (2).

Therefore, according to the ventilator (HRV) of the present embodiment, as in the case of the ventilator (HRV) of Embodiment 1, when the exhaust fan (2) operates and a negative pressure is generated on the upstream side of the exhaust fan (2) in the exhaust path (15), the air in the electrical component box (5) is sucked from the air outlet (52) of the electrical component box (5) into the exhaust path (15) of the main-body casing (1).

As a result, the air (A) outside the main-body casing (1) is introduced from the air inlet (51) of the electrical component box (5), and the air (A) flows from the air inlet (51) to the air outlet (52) inside the electrical component box (5). This air (A) can cool the heat generating component (HPC) stored in the electrical component box (5). Therefore, according to the ventilator (HRV) of the present embodiment, the heat generating component (HPC) can be cooled without installing an additional fan inside the electrical component box (5), and thus, an increase in cost can be suppressed.

The air outlet (52) of the electrical component box (5) communicates with the exhaust path (15) inside the main-body casing (1). Therefore, the air (A) outside the main-body casing (1) introduced from the air inlet (51) of the electrical component box (5) can be discharged from the exhaust path (15) inside the main-body casing (1) to the space outside the building through an exhaust duct (EAD) and the exhaust opening. Thus, it is possible to suppress a decrease in an effective ventilation amount of an indoor space (IDS).

Furthermore, in the ventilator (HRV) of the present embodiment, the exhaust path (15) of the main-body casing (1) includes the exhaust inlet (11) opened at the upstream end of the exhaust path (15) and the exhaust outlet (12) opened at the downstream end of the exhaust path (15). Moreover, the electrical component box (5) is disposed inside the exhaust path (15) between the total heat exchanger (4) and the exhaust inlet (11).

With this configuration, at least a part of the electrical component box (5) is disposed inside the main-body casing (1), and the air outlet (52) can communicate with the air inlet (51). Therefore, the ventilator (HRV) can be miniaturized as compared with the case where the entire electrical component box (5) is disposed outside the main-body casing (1). Even when the electrical component box (5) is arranged outside the main-body casing (1), the ventilator (HRV) can be miniaturized by providing a recess in the first sidewall (1c) of the main-body casing (1) and installing the electrical component box (5) in the recess.

In addition, the electrical component box (5) may be partially arranged inside the exhaust path (15) and the rest of the electrical component box (5) projecting toward the outside of the main-body casing (1). In this case, the air inlet (51) can be formed in sidewalls (5b, 5c, and 5d) of the electrical component box (5) located outside the main-body casing (1) to expand an opening area of the air inlet (51).

In addition, the ventilator (HRV) of the present embodiment includes the connecting path (6) for communicating the air outlet (52) of the electrical component box (5) with the exhaust path (15).

With this configuration, the degree of freedom of the position where the air outlet (52) is formed in the electrical component box (5) can be enhanced, and the heat generating component (HPC) can be cooled more effectively. Specifically, for example, as illustrated in FIG. 5, even when the exhaust path (15) is provided on the lower side of the main-body casing (1), the air outlet (52) of the electrical component box (5) can be formed at a position facing the air supply path (16) on the upper side of the main-body casing (1). Thus, the heat generating component (HPC) can be readily arranged between the air inlet (51) and the air outlet (52), and thus, the heat generating component (HPC) can be cooled more effectively.

As described above, according to the present embodiment, it is possible to provide a ventilator (HRV) which can cool the heat generating component (HPC) stored in the electrical component box (5) without installing an additional fan in the electrical component box (5) and can suppress an increase in cost.

The preferred embodiments of the present disclosure have been described in detail above. However, the present disclosure is not limited to the embodiments described above. The embodiments described above can be modified or replaced without departing from the scope of the present disclosure. Also, the features described separately can be combined as long as there is no technical conflict.

This application claims priority under Japanese Patent Application No. 2024-015943, filed on February 5, 2024, the entire contents of which are incorporated herein by reference.

### REFERENCE SIGNS LIST

- 1: Main-body casing
- 1c: First sidewall
- 11: Exhaust inlet
- 12: Exhaust outlet
- 15: Exhaust path
- 15c: Partition wall
- 16: Air supply path
- 17: Takeout port
- 19a: Air intake port
- 2: Exhaust fan
- 3: Air supply fan
- 4: Total heat exchanger
- 5: Electrical component box
- 5a: Sidewall
- 5b: Sidewall
- 5c: Sidewall
- 5d: Sidewall
- 51: Air inlet
- 51a: Slits
- 52: Air outlet
- 6: Connecting path
- A: Air
- HPC: Heat generating component
- HRV: Ventilator

## Claims

1. A ventilator (HRV), comprising:
a main-body casing (1);
an exhaust fan (2) disposed in an exhaust path (15) inside the main-body casing (1);
an air supply fan (3) disposed in an air supply path (16) inside the main-body casing (1);
a total heat exchanger (4) disposed in the exhaust path (15) and the air supply path (16); and
an electrical component box (5) connected to the main-body casing (1) and configured to house a heat generating component (HPC), wherein
the electrical component box (5) includes
an air inlet (51) configured to introduce air (A) outside the main-body casing (1), and
an air outlet (52) communicating with the exhaust path (15) on an upstream side of the exhaust fan (2).

2. The ventilator (HRV) according to claim 1, wherein
the main-body casing (1) includes a first sidewall (1c) provided with a takeout port (17) for the total heat exchanger (4), and
the electrical component box (5) is connected to the first sidewall (1c).

3. The ventilator (HRV) according to claim 1 or 2, wherein
the exhaust path (15) includes an exhaust inlet (11) opened at an upstream end of the exhaust path (15) and an exhaust outlet (12) opened at a downstream end of the exhaust path (15), and
the electrical component box (5) is disposed between the total heat exchanger (4) and the exhaust inlet (11), inside the exhaust path (15).

4. The ventilator (HRV) according to claim 3, further comprising:
a connecting path (6) configured to communicate the air outlet (52) of the electrical component box (5) with the exhaust path (15).

5. The ventilator (HRV) according to claim 1 or 2, wherein
the electrical component box (5) is arranged outside the main-body casing (1).

6. The ventilator (HRV) according to claim 5, further comprising:
a connecting path (6) for communicating the air outlet (52) of the electrical component box (5) with an air intake port (19a) opened in a partition wall (15c) of the exhaust path (15).

7. The ventilator (HRV) according to any one of claims 1 to 6, wherein
the air inlet (51) of the electrical component box (5) includes a plurality of slits (51a) formed in the electrical component box (5).

8. The ventilator (HRV) according to any one of claims 1 to 7, wherein
the air inlet (51) of the electrical component box (5) is provided on a sidewall (5a, 5b, 5c, or 5d) of the electrical component box (5).
